# EUROPEAN PATENT APPLICATION

(11) **EP 4 365 259 A1**
(43) Date of publication of application: **08.05.2024**
(21) Application number: 22833076.7
(22) Date of filing: 27.06.2022
(51) Int. Cl.: C09K 3/10

(54) **SEALANT MATERIAL COMPOSITION AND TIRE USING SAME**

(30) Priority: 01.07.2021 JP 2021110041
(71) Applicant: The Yokohama Rubber Co., Ltd., Kanagawa, 254-8601 (JP)
(72) Inventor: KARASAWA, Yuichiro, Hiratsuka-shi, Kanagawa 254-8601 (JP); SAIKI, Takeaki, Hiratsuka-shi, Kanagawa 254-8601 (JP); OKAMATSU, Takahiro, Hiratsuka-shi, Kanagawa 254-8601 (JP)
(74) Representative: Grünecker Patent- und Rechtsanwälte PartG mbB
(86) International application number: PCT/JP2022/025519
(87) International publication number: WO 2023/276929

(57) **Abstract**

A sealant composition of an embodiment of the present invention constitutes a sealant layer of a pneumatic tire provided with the sealant layer on the tire inner surface. The sealant composition contains a rubber component, a tackifier, a plasticizer, and a crosslinking component, and has an adhesive force to a steel material of 12 N or more.

## Description

### Technical Field

The present invention relates to a sealant composition and a tire using the same.

### Background Art

Among pneumatic tires, a pneumatic tire is known that is provided with a sealant layer disposed on an inner side of an innerliner layer in a tire radial direction in a tread portion. In such a pneumatic tire, when a foreign matter such as a nail or the like penetrates into the tread portion, a sealant flows into a through-hole, which makes it possible to exhibit sealing properties, and suppress a decrease in air pressure, and maintain travel.

It is known that the improved sealing properties can be achieved when a viscosity of sealant is reduced generally by using a butyl rubber as a rubber component and blending a large amount of plasticizer to facilitate a flow of the sealant into a through-hole. For example, the following patent document describes a sealant composition constituting a sealant layer of a pneumatic tire provided with the sealant layer on a tire inner surface, the sealant composition being prepared by blending from 1 part by mass to 40 parts by mass of a crosslinking aid, from 50 parts by mass to 400 parts by mass of a liquid isobutylene-isoprene copolymer having a molecular weight of 10000 to 60000, and from 1 part by mass to 40 parts by mass of an organic peroxide, per 100 parts by mass of a halogenated butyl rubber.

### Citation List

### Patent Document

Patent Document 1: JP 6583456 B

### Summary of Invention

### Technical Problem

An object of the present invention is to provide a sealant composition that can provide adequately improved sealing properties over known technologies to a through-hole that is formed when a foreign matter such as a nail or the like penetrates into the tread portion.

### Solution to Problem

As a result of diligent research, the inventors found that the issues described above can be solved by a sealant composition containing a rubber component, a tackifier, a plasticizer, and a crosslinking component and having an adhesive force to a steel material set to a specific value or more, and thus the present invention can be completed.

The present invention provides a sealant composition constituting a sealant layer of a pneumatic tire provided with the sealant layer on a tire inner surface,
the sealant composition containing a rubber component, a tackifier, a plasticizer, and a crosslinking component, and having an adhesive force to a steel material of 12 N or more.

### Advantageous Effects of Invention

The sealant composition according to an embodiment of the present invention contains a rubber component, a tackifier, a plasticizer, and a crosslinking component, and having an adhesive force to a steel material is 12 N or more. According to the configuration described above, for example, even in a case where the viscosity of the sealant composition is high, sealing properties for a through-hole that is formed when a foreign matter such as a nail or the like penetrates into the tread portion, can be adequately improved more than known technologies.

### Brief Description of Drawings

FIG. 1 is a perspective cross-sectional view of a pneumatic tire according to an embodiment of the present invention.
FIG. 2 is a cross-sectional view taken along an equator line of a pneumatic tire according to an embodiment of the present invention.
FIG. 3 is a cross-sectional view illustrating an enlarged portion of a part of the pneumatic tire according to an embodiment of the present invention.

### Description of Embodiments

The present invention will be described in further detail below.

### Rubber Component

Examples of a rubber component used in an embodiment of the present invention include diene rubber such as natural rubber (NR), synthetic isoprene rubber (IR), butadiene rubber (BR), styrene-butadiene copolymer rubber (SBR), acrylonitrile-butadiene copolymer rubber (NBR), ethylene-propylene-diene terpolymer (EPDM), and butyl rubber. These may be used alone, or two or more may be used in combination.

In particular, from the perspective of improving the effects of the present invention, the rubber component is preferably NR, IR, SBR, BR, or a blend thereof.

### Tackifier

An example of a tackifier used in an embodiment of the present invention includes hydrocarbon resin.

An example of the hydrocarbon resin includes petroleum resin such as aromatic hydrocarbon resin that is manufactured by polymerizing components obtained by performing treatments such as distillation, decomposition, and reforming on crude oil, or petroleum resin such as saturated or unsaturated hydrocarbon resin. Examples of the petroleum resin include C5 petroleum resin (aliphatic petroleum resin formed by polymerizing fractions such as isoprene, 1,3-pentadiene, cyclopentadiene, methylbutene, and pentene), C9 petroleum resin (aromatic petroleum resin formed by polymerizing fractions such as α-methylstyrene, o-vinyl toluene, m-vinyl toluene, and p-vinyl toluene), C5C9 copolymer petroleum resin, and the like.

Further, the glass transition temperature (Tg) of the tackifier is preferably higher than 0°C. By specifying Tg as just described, fluidity is improved. For the glass transition temperature (Tg) in an embodiment of the present invention, a thermograph is measured by differential scanning calorimetry (DSC) at a rate of temperature increase of 20°C/minute, and the temperature at the midpoint of the transition region is defined as the glass transition temperature.

The aforementioned Tg is more preferably 30°C or higher and 90°C or lower.

Further, the number average molecular weight of the tackifier is preferably from 400 to 2000. By having a number average molecular weight in this range, adhesive force is improved.

### Plasticizer

Examples of the plasticizer used in the present invention are a carboxylic acid ester plasticizer, a phosphoric acid ester plasticizer, a sulfonic acid ester plasticizer, oil, liquid rubber, and the like.

Examples of the carboxylic acid ester plasticizer include publicly known phthalic acid esters, isophthalic acid esters, tetrahydrophthalic acid esters, adipic acid esters, maleic acid esters, fumaric acid esters, trimellitic acid esters, linoleic acid esters, oleic acid esters, stearic acid esters, ricinoleic acid esters, and the like.

Examples of the phosphoric acid ester plasticizer include publicly known trimethyl phosphate, triethyl phosphate, tributyl phosphate, tri(2-ethylhexyl) phosphate, 2-ethylhexyl diphenyl phosphate, tributoxyethyl phosphate, triphenyl phosphate, cresyl diphenyl phosphate, isodecyl diphenyl phosphate, tricresyl phosphate, tritolyl phosphate, trixylenyl phosphate, tris(chloroethyl) phosphate, diphenyl mono-o-xenyl phosphate, and the like.

Examples of the sulfonic acid ester plasticizer include publicly known benzene sulfone butylamide, toluenesulfonamide, N-ethyl-toluenesulfonamide, N-cyclohexyl-p-toluenesulfonamide, and the like.

Examples of the oil include publicly known mineral oils such as paraffin-based process oil, naphthene-based process oil, and aromatic process oil.

Examples of the liquid rubber include liquid polyisoprene, liquid polybutadiene, liquid polystyrene butadiene, and the like, and the weight average molecular weight thereof is preferably 1000 to 100000, and more preferably 1500 to 75000. Further, the weight average molecular weight in the present invention refers to a value or a weight average molecular weight determined by gel permeation chromatography (GPC) based on calibration with polystyrene. Furthermore, the liquid rubber used in the present invention is liquid at 23°C. As a result, the liquid rubber is distinguished from the aforementioned rubber component that is solid at this temperature.

Of the rubbers described above, oil or liquid rubber is preferable as the plasticizer from the perspective of improving the effects of the present invention.

### Crosslinking Component

Examples of the crosslinking component used in an embodiment of the present invention include sulfur and a vulcanization accelerator as components to improve sealing properties.

Examples of the vulcanization accelerator used in an embodiment of the present invention include known guanidine-based, thiazole-based, sulfenamide-based, thiourea-based, dithiocarbamate-based, xanthogenate-based, and thiuram-based vulcanization accelerators. In particular, one or more types selected from a thiazole-based vulcanization accelerator, a sulfenamide-based vulcanization accelerator, a thiourea-based vulcanization accelerator, and a thiuram-based vulcanization accelerator are preferred.

### Blending Ratio of Sealant Composition

In a preferred embodiment, the sealant composition of an embodiment of the present invention contains less than 30 parts by mass of the tackifier, from 20 to 150 parts by mass of the plasticizer, from 0.1 to 10 parts by mass of the sulfur, and from 0.1 to 10 parts by mass of the vulcanization accelerator, per 100 parts by mass of the rubber component.

When the blended amount of the tackifier is less than 30 parts by mass per 100 parts by mass of the rubber component, the effects of the present invention are enhanced, and viscosity temperature dependency and storability of the sealant composition become good. The blended amount of the tackifier is preferably from 1 to 29 parts by mass, and more preferably from 10 to 29 parts by mass. Note that, in an embodiment that is different from the one described above, from the perspective of improving an adhesive force between a nail or the like and the tackifier, more than 90 parts by mass of the tackifier may be blended per 100 parts by mass of the rubber component. In this embodiment, the blended amount of the tackifier is preferably more than 90 parts by mass and 150 parts by mass or less.

When the blended amount of the plasticizer is 20 parts by mass or more per 100 parts by mass of the rubber component, the sealing properties are further improved. On the other hand, when the blended amount of the plasticizer is 150 parts by mass or less, the adhesive force to a steel material is increased. The blended amount of the plasticizer is more preferably from 30 to 90 parts by mass.

Further, when the blended amount of the sulfur or the vulcanization accelerator is in a range of 0.1 to 10 parts by mass, the sealing properties are improved. When sulfur is blended as the crosslinking component, the sealant composition of an embodiment of the present invention can be dynamically cross-linked.

### Other Components

Various additives such as a vulcanizing or crosslinking agent, a vulcanizing or cross-linking accelerator, zinc oxide, an anti-aging agent, and carbon black other than the aforementioned components can be blended in the sealant composition of the present invention. Such additives can be kneaded by a typical method to form a composition, and the blended amount of the additives can be a typical blended amount in the related art unless contrary to the object of the present invention.

In the sealant composition of an embodiment of the present invention, a complex viscosity at 30°C is preferably 1000 Pa s or more. When the complex viscosity at 30°C is 1000 Pa·s or more, the sealant composition does not excessively flow, excellent fluidity is achieved, and deterioration of sealing properties can be prevented. The complex viscosity at 30°C is preferably from 3000 to 15000 Pa·s, and more preferably from 5000 to 10000 Pa·s.

Note that the complex viscosity is measured for the sealant composition after vulcanization and can be measured by a method according to ASTM D 4440.

The sealant composition according to an embodiment of the present invention needs to have an adhesive force to a steel material of 12 N or more. When the adhesive force to a steel material is 12 N or more, for example, even in a case where the complex viscosity of the sealant composition is high as described above, improved sealing properties can be adequately achieved over known technologies to a through-hole that is formed when a foreign matter such as a nail or the like penetrates into the tread portion. On the other hand, when the adhesive force is less than 12 N, sealing properties cannot be exhibited adequately.

Note that, the adhesive force of the sealant composition to a steel material in an embodiment of the present invention means an adhesive force of the sealant composition after vulcanization to a steel material.

The adhesive force to a steel material is preferably from 12 to 25 N, and more preferably from 15 to 20 N.

The adhesive force can be measured by PICMA Tack Tester, available from Toyo Seiki Seisaku-sho, Ltd. The measurement conditions were as follows:
Contact maker compression bonding load: 4.9 N
Compression bonding time: 10 seconds
Compression bonding rate: 50 cm/min
Peeling rate: 125 cm/min
Object to be attached: steel material (carbon concentration can be in an ordinary range; an example thereof includes 0.0218 to 2.14%)

The sealant composition of the present invention can be provided as a sealant layer on an inner side of an innerliner layer in a tire radial direction in a tread portion in a pneumatic tire. The sealant layer can be formed by vulcanizing a sealant made of the sealant composition of an embodiment of the present invention by molding it in a sheet shape, and attaching the sheet-shaped molded sealant to the entire circumference of the tire inner surface. Alternatively, the sealant layer can be formed by vulcanizing the sealant and spirally attaching a string-shaped or band-shaped molded sealant to the tire inner surface. With the sealant layer, when a foreign matter such as a nail or the like penetrates into the tread portion, the sealant constituting the sealant layer flows into the through-hole, and as a result, a decrease in air pressure can be suppressed and travel can be maintained. The sealant layer has a thickness of, for example, 0.5 mm to 5.0 mm.

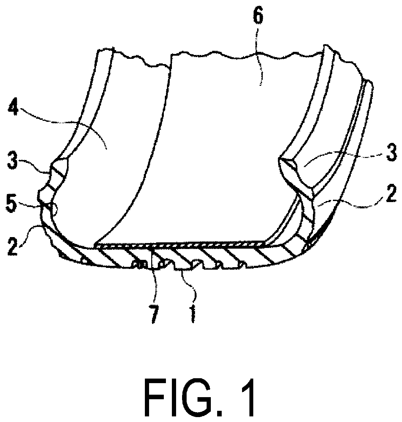

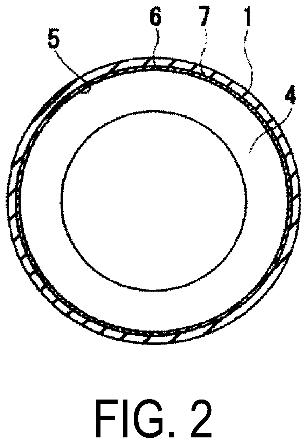

In FIGS. 1 and 2, the pneumatic tire according to the present embodiment includes a tread portion 1 extending in the tire circumferential direction having an annular shape, a pair of sidewall portions 2 disposed on both sides of the tread portion 1, and a pair of bead portions 3 disposed inward of the sidewall portions 2 in the tire radial direction. A sealant layer 6 is attached to a cavity portion 4 surrounded by the tread portion 1, the sidewall portions 2, and the bead portions 3. This sealant layer 6 is disposed in a region corresponding to the tread portion 1 on a tire inner surface 5.

The sealant layer 6 is made of the sealant composition of an embodiment of the present invention. The sealant layer 6 can be attached to the tire inner surface 5 by its adhesiveness.

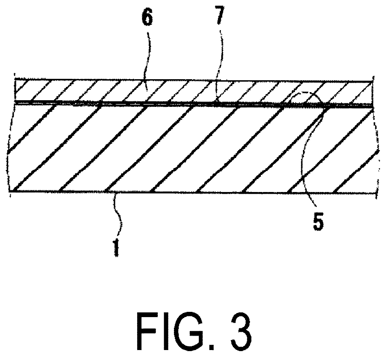

For the pneumatic tire, as illustrated in FIG. 3, the sealant layer 6 and a transferred layer 7 of a release agent are layered in the tire inner surface 5 in this order from the inner side in the tire radial direction. This transferred layer 7 of the release agent is transferred to the tire inner surface 5 in the vulcanized pneumatic tire by vulcanization of a green tire using a bladder provided with a coating layer containing the release agent. The release agent transferred in this manner is not on the entire tire inner surface 5, but is scattered.

The release agent in the inner surface of the tread portion 1 contains an amount of silicon of preferably 10.0 mass% or less in at least a placement region of the sealant layer 6 of the tire inner surface 5. In an embodiment of the present invention, in defining an amount of the release agent in an inner surface of the tread portion 1, an amount of silicon that is a main component of a typical release agent is used as an indicator. The amount of silicon can be detected using fluorescence X-ray analysis method, and in general, while the fluorescence X-ray analysis method includes a fundamental parameter method (FP method) and a calibration curve method, the present invention employs the FP method. In a case where the amount of the release agent (silicon) is measured, sheet samples (dimensions: a width of 70 mm, a length of 100 mm) are used that are obtained by peeling off the carcass layer and the innerliner layer at a plurality of sections of the pneumatic tire described above (for example, a total of seven sections including four sections in the tire circumferential direction and three sections in the tire width direction), from each sheet sample, measurement samples (dimensions: a width ranging from 13 mm to 15 mm, a length ranging from 35 mm to 40 mm) are further sampled at a total of five sections, including four corners and one central portion, and the amount of release agent is measured using a fluorescence X-ray analyzer for each measurement sample. Then, measurement values for five measurement samples are averaged for each of the sheet samples to calculate the amount of release agent per sheet sample, and each of the calculated values is in a range of 10.0 mass% or less. X-ray fluorescence particles have an intrinsic energy proportional to an atomic number, allowing an element to be identified by measuring the intrinsic energy. Specifically, the intrinsic energy of silicon is 1.74 ± 0.05 keV. Note that the number of X-ray fluorescence particles (X-ray intensity) of the release agent (silicon) is in a range of from 0.1 cps/µA to 1.5 cps/µA.

Examples of a component constituting the transferred layer 7 made of the release agent include a component containing a silicone component as an active ingredient. The silicone component includes organopolysiloxanes, and the examples can include dialkylpolysiloxane, alkylphenylpolysiloxane, alkyl aralkyl polysiloxane, and 3,3,3-trifluoropropylmethylpolysiloxane. The dialkylpolysiloxane is, for example, dimethylpolysiloxane, diethylpolysiloxane, methylisopropylpolysiloxane, and methyldodecylpolysiloxane. The alkylphenylpolysiloxane is, for example, methylphenylpolysiloxane, a dimethylsiloxane methylphenylsiloxane copolymer, and dimethylsiloxane-diphenylsiloxane copolymer. The alkyl aralkyl polysiloxane is, for example, methyl(phenylethyl)polysiloxane and methyl(phenylpropyl)polysiloxane. One kind or two or more kinds of these organopolysiloxanes may be used in combination.

As described above, by performing vulcanization using the bladder including the coating layer made of the release agent, the amount of silicon of the release agent transferred onto at least the placement region of the sealant layer 6 can be set to 10.0 mass% or less. In this way, adhesion between the tire inner surface 5 and the sealant layer 6 can be adequately ensured. Note that, when the amount of silicon of the release agent in the placement region of the sealant layer 6 is 10.0 mass% or less, adhesiveness of the sealant layer 6 can be improved, and thus adequate durability can be achieved.

### Examples

The present invention will be described in further detail by way of examples and comparative examples, but the present invention is not limited by these examples. Additionally, in the following examples, "parts" means "parts by mass".

### Examples 1 to 5 and Comparative Example 1

According to the blend (parts by mass) indicated in Table 1, kneading was performed for 40 minutes in a 1.7-L sealed Banbury Mixer, and a sealant composition was obtained. Next, the obtained sealant composition was press-vulcanized in a predetermined mold at 180°C for 10 minutes, and a sealant having a thickness of 3 mm was obtained.

The adhesive force of the sealant composition obtained as described above was measured by the method described above.

Further, the complex viscosity at 30°C of the sealant composition obtained as described above was measured by the method described above.

In a pneumatic tire having a tire size of 215/55R17, including a tread portion, a pair of sidewall portions, and a pair of bead portions, and including a sealant layer made of a sealant on an inner side of the innerliner layer in a tire radial direction in the tread portion, the sealant was attached as the sealant layer to manufacture a test tire. The following physical properties were measured for the obtained test tires.

### Sealability:

The test tires were assembled on wheels having a rim size of 17 × 7J and mounted on a test vehicle, with an initial air pressure of 250 kPa, a 4 mm-diameter nail was driven into the tread portion, and then the test tires were left to stand for one hour after the nail was removed. Thereafter, the air pressure was measured. The evaluation results were indicated by "O" in a case where the air pressure after the tire was left to stand was 230 kPa or higher and 250 kPa or lower, by "△" in a case where the air pressure after the tire was left to stand was 200 kPa or higher and less than 230 kPa, and by "×" in a case where the air pressure after the tire was left to stand was less than 200 kPa.

The results are present in Table 1.

### Table 1

**Table 1**

| Blend | | Comparative Example 1 | Example 1 | Example 2 | Example 3 | Example 4 | Example 5 |
|---|---|---|---|---|---|---|---|
| NR | 1) | 60 | 60 | 60 | 60 | 60 | 60 |
| SBR | 2) | 40 | 40 | 40 | 40 | 40 | 40 |
| Tackifier | 3) | | 25 | 25 | 25 | 60 | 90 |
| Plasticizer | 4) | 100 | 30 | 45 | 60 | 60 | 30 |
| Sulfur | 5) | 0.5 | 0.5 | 0.5 | 0.5 | 0.5 | 0.5 |
| Vulcanization accelerator DM-PO | 6) | 1.0 | 1.0 | 1.0 | 1.0 | 1.0 | 1.0 |
| Adhesive force (N) | | 9.4 | 16.9 | 16.9 | 14.2 | 14.6 | 22.0 |
| Complex viscosity at 30°C (Pa·s) | | 10500 | 15100 | 11200 | 8400 | 5600 | 7400 |
| Sealability | | × | ○ | ○ | ○ | ○ | ○ |

| | | | | | | | |
|---|---|---|---|---|---|---|---|
| * 1: NR (SIR20) *2: SBR (Nipol 1502 available from Zeon Corporation) *3: Tackifier (T-REZ RC115, C5 petroleum resin available from ENEOS Corporation) *4: Plasticizer (Diana Process Oil NP250 (naphthene-based process oil) available from Idemitsu Kosan Co., Ltd.) *5: Sulfur (Golden Flower oil treated sulfur powder, available from Tsurumi Chemical Industry Co., Ltd.) *6: Vulcanization accelerator DM-PO (SANCELER DM-PO available from Sanshin Chemical Industry Co., Ltd.) | | | | | | | |

From the results of Table 1, the sealant composition of each of Examples contained a rubber component, a tackifier, a plasticizer, and a crosslinking component and had the adhesive force to a steel material of 12 N or more, and thus was excellent in sealing properties.

On the other hand, because Comparative Example 1 had the adhesive force to a steel material of 9.4 N, which was less than the lower limit specified in the present invention, sealing properties deteriorated.

The present invention includes the following embodiments:
First Embodiment:
   A sealant composition constituting a sealant layer of a pneumatic tire provided with the sealant layer on a tire inner surface,
   the sealant composition containing a rubber component, a tackifier, a plasticizer, and a crosslinking component, and having an adhesive force to a steel material of 12 N or more.
Second Embodiment:
   The sealant composition according to First Embodiment, where a complex viscosity at 30°C is 1000 Pa s or more.
Third Embodiment:
   The sealant composition according to First Embodiment or Second Embodiment, where the rubber component is natural rubber, synthetic isoprene rubber, styrene-butadiene copolymer rubber, butadiene rubber, or a blend of the rubbers.
Fourth Embodiment:
   The sealant composition according to any one of First Embodiment to Third Embodiment, where the tackifier is hydrocarbon resin.
Fifth Embodiment:
   The sealant composition according to any one of First Embodiment to Fourth Embodiment, where a glass transition temperature (Tg) of the tackifier is higher than 0°C.
Sixth Embodiment:
   The sealant composition according to any one of First Embodiment to Fifth Embodiment, where a number average molecular weight of the tackifier is from 400 to 2000.
Seventh Embodiment:
   The sealant composition according to any one of First Embodiment to Sixth Embodiment, where a blended amount of the tackifier is less than 30 parts by mass per 100 parts by mass of the rubber component.
Eighth Embodiment:
   The sealant composition according to any one of First Embodiment to Seventh Embodiment, where the plasticizer is oil or liquid rubber.
Ninth Embodiment:
   The sealant composition according to any one of First Embodiment to Eighth Embodiment, where a blended amount of the plasticizer is from 20 to 150 parts by mass per 100 parts by mass of the rubber component.
Tenth Embodiment:
   The sealant composition according to any one of First Embodiment to Ninth Embodiment, where the crosslinking component contains sulfur and a vulcanization accelerator.
Eleventh Embodiment:
   The sealant composition according to Tenth Embodiment, where a blended amount of the sulfur is from 0.1 to 10 parts by mass per 100 parts by mass of the rubber component.
Twelfth Embodiment:
   A tire using the sealant composition according to any one of First Embodiment to Eleventh Embodiment.

## Claims

1. A sealant composition constituting a sealant layer of a pneumatic tire provided with the sealant layer on a tire inner surface,
the sealant composition comprising a rubber component, a tackifier, a plasticizer, and a crosslinking component, and having an adhesive force to a steel material of 12 N or more.

2. The sealant composition according to claim 1, wherein a complex viscosity at 30°C is 1000 Pa s or more.

3. The sealant composition according to claim 1, wherein the rubber component is natural rubber, synthetic isoprene rubber, styrene-butadiene copolymer rubber, butadiene rubber, or a blend of the rubbers.

4. The sealant composition according to claim 1, wherein the tackifier is hydrocarbon resin.

5. The sealant composition according to claim 1, wherein a glass transition temperature (Tg) of the tackifier is higher than 0°C.

6. The sealant composition according to claim 1, wherein a number average molecular weight of the tackifier is from 400 to 2000.

7. The sealant composition according to claim 1, wherein a blended amount of the tackifier is less than 30 parts by mass per 100 parts by mass of the rubber component.

8. The sealant composition according to claim 1, wherein the plasticizer is oil or liquid rubber.

9. The sealant composition according to claim 1, wherein a blended amount of the plasticizer is from 20 to 150 parts by mass per 100 parts by mass of the rubber component.

10. The sealant composition according to claim 1, wherein the crosslinking component comprises sulfur and a vulcanization accelerator.

11. The sealant composition according to claim 10, wherein a blended amount of the sulfur is from 0.1 to 10 parts by mass per 100 parts by mass of the rubber component.

12. A tire using the sealant composition according to claim 1.
